# EUROPEAN PATENT APPLICATION

(11) **EP 4 772 584 A2**
(43) Date of publication of application: **08.07.2026**
(21) Application number: 26159041.8
(22) Date of filing: 16.08.2023
(51) Int. Cl.: C09D 5/03

(54) **DIELECTRIC COATINGS**

(30) Priority: 17.08.2022 WO PCT/CN2022/113045
(62) Divisional of application: 23191779.0
(71) Applicant: PPG Industries Ohio, Inc., Cleveland, OH 44111 (US); PPG Powder Coatings (Shanghai) Co.,Ltd., 201809 Shanghai (CN)
(72) Inventor: Ma, Liang, Shanghai, 201809 (CN); Chen, Baolin, Shanghai, 201809 (CN); Wu, Cuiping, Shanghai, 201809 (CN); Fan, Naiyong, Shanghai, 201809 (CN)
(74) Representative: f & e patent

(57) **Abstract**

Disclosed herein are coated substrates comprising a coating layer and an adhesive formed on at least a portion of the coating layer. The coating layer may be deposited from a powder coating composition and comprises a dielectric strength of at least 50 kV/mm measured according to ASTM D149-09 (voltage limit 12.0 kV DC, Imax Limit 0.1 mA, 19 sec ramp, 20 sec dwell, 2 sec fall) and a thermal conductivity of at least 0.3 W/K·m measured according to ASTM D5470 (steady-state methods). The adhesive may be formed from an adhesive composition and comprises a thermal conductivity of at least 1.0 W/K·m measured according to ASTM D5470. Also disclosed herein are systems for coating substrates. Also disclosed are methods of coating a substrate.

## Description

### CROSS-REFERENCE TO RELATED APPLICATIONS

This application claims priority to PCT Application No. PCT/CN2022/113045, filed on August 17, 2022, entitled "Dielectric Coatings," incorporated herein by reference in its entirety.

### FIELD

The present disclosure is directed towards dielectric coatings, systems for coating substrates, methods for coating substrates, and coated substrates.

### BACKGROUND

Coatings, including those formed from powder coating compositions, and adhesives are utilized in a wide variety of applications, including use as interface materials to manage structural integrity and thermal management in heat transfer systems.

### SUMMARY

Disclosed herein are coated substrates comprising a coating layer and an adhesive formed on at least a portion of the coating layer, wherein the coating layer is deposited from a powder coating composition and comprises a dielectric strength of at least 50 kV/mm measured according to ASTM D149-09 (voltage limit 12.0 kV DC, Imax Limit 0.1 mA, 19 sec ramp, 20 sec dwell, 2 sec fall), such as at least 60 kV/mm, such as no more than 120 kV/mm, such as no more than 100 kV/mm, such as 50 kV/mm to 120 kV/mm, such as 60 kV/mm to 100 kV/mm, and a thermal conductivity of at least 0.3 W/K·m measured according to ASTM D5470 (steady-state methods), such as at least 0.35 W/K·m, such as no more than 0.5 W/K·m, such as no more than 0.45 W/K·m, such as 0.3 W/K·m to 0.5 W/K·m, such as 0.35 W/K·m to 0.45 W/K·m, and wherein the adhesive is formed from an adhesive composition and comprises a thermal conductivity of at least 0.7 W/K·m measured according to ASTM D5470, such as at least 0.8 W/K·m, such as at least 0.9 W/K·m, such as at least 1.0 W/K·m, such as at least 1.5 W/K·m, such as no more than 2.5 W/K·m, such as no more than 2.0 W/K·m, such as 0.7 W/K·m to 2.5 W/K·m, such as 0.8 W/K·m to 2.5 W/K·m, such as 0.9 W/K·m to 2.5 W/K·m, such as 1.0 W/K·m to 2.5 W/K·m, such as 1.5 W/K·m to 2.5 W/K·m, such as 0.7 W/K·m to 2.0 W/K·m, such as 0.8 W/K·m to 2.0 W/K·m, such as 0.9 W/K·m to 2.0 W/K·m, such as 1.0 W/K·m to 2.0 W/K·m, such as 1.5 W/K·m to 2.0 W/K·m.

Also disclosed herein are systems for coating substrates comprising a powder coating composition comprising an electrically insulative filler and an adhesive coating composition comprising a thermally conductive filler, wherein the two layers, when deposited on a substrate and cured, have a thermal resistance of no more than 2.0 °C/W as measured using a TIM Thermal Resistance and Conductivity Measurement Apparatus (model LW-9389) in accordance with ASTM D5470 (steady-state method), such as 0.5 °C/W to 2.0 °C/W.

Also disclosed are methods of coating a substrate comprising applying a powder composition onto a surface of the substrate to form a coating and applying an adhesive composition to at least a portion of the coating to form an adhesive.

### BRIEF DESCRIPTION OF THE DRAWINGS

FIG. 1 is a schematic of a top-down view of cylindrical battery cells.
FIG. 2 is a schematic of an exploded isometric view of an array of prismatic battery cells.
FIG. 3 is a schematic of a front view of an array of pouch battery cells.
FIG. 4 is a schematic of an isometric view of cylindrical cells positioned in a battery module.
FIG. 5 is a schematic of an exploded perspective view of a battery pack comprising multiple battery cells.
FIG. 6 is a schematic of an isometric view of (A) a battery cell, (B) a battery module, and (C) a battery pack.
FIG. 7 is a schematic of a perspective view of a battery pack.
FIG. 8 is a schematic of a cell to battery pack configuration.
FIG. 9 is a schematic of an isometric cut-out view of a cell to chassis battery assembly.

### DETAILED DESCRIPTION

For purposes of this detailed description, it is to be understood that the present disclosure may assume alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

As used herein, "including," "containing" and like terms are understood in the context of this application to be synonymous with "comprising" and are therefore open-ended and do not exclude the presence of additional undescribed or unrecited elements, materials, ingredients or method steps.

As used herein, "consisting of" is understood in the context of this application to exclude the presence of any unspecified element, ingredient or method step.

As used herein, "consisting essentially of" is understood in the context of this application to include the specified elements, materials, ingredients or method steps "and those that do not materially affect the basic and novel characteristic(s)" of what is being described. As used herein, open-ended terms include closed terms such as "consisting essentially" of and "consisting of."

In this application, the use of the singular includes the plural and plural encompasses singular, unless specifically stated otherwise. For example, although reference is made herein to "a" coating or "an" filler material, a combination (i.e., a plurality) of these components may be used.

In addition, in this application, the use of "or" means "and/or" unless specifically stated otherwise, even though "and/or" may be explicitly used in certain instances.

As used herein, the terms "on," "onto," "applied on," "applied onto," "formed on," "deposited on," "deposited onto," and the like mean formed, overlaid, deposited, or provided on, but not necessarily in contact with, a substrate surface. For example, a composition "applied onto" a substrate surface does not preclude the presence of one or more other intervening coating layers or films of the same or different composition located between the composition and the substrate surface.

As used herein, a "coating composition" refers to a composition, e.g., a mixture or a dispersion, that is capable of producing a film, layer, or the like on at least a portion of a substrate surface.

As used herein, a "powder coating composition" refers to a coating composition embodied in solid particulate form as opposed to liquid form.

As used herein, the term "adhesive" means an adhesive producing a load-bearing joint having a lap shear strength of greater than 3.0 MPa, measured according to ASTM D1002-10 using 2024-T3 aluminum substrate of 1.6 mm thickness, as measured by an INSTRON 5567 machine in tensile mode with a pull rate of 1.3 mm per minute.

As defined herein, a "1K" or "one-component" coating composition, is a composition in which all of the ingredients may be premixed and stored and wherein the reactive components do not readily react at ambient or slightly thermal conditions, but instead only react upon activation by an external energy source. In the absence of activation from the external energy source, the composition will remain largely unreacted (maintaining sufficient workability in the uncured state and greater than 70% of the initial lap shear strength of the composition in the cured state after storage at 25°C for 8 months). External energy sources that may be used to promote the curing reaction (i.e., the crosslinking of the epoxy component and the curing agent) include, for example, radiation (i.e., actinic radiation) and/or heat.

"Ambient" conditions generally refer to room temperature and humidity conditions and may be 10°C to 32°C and 20% relative humidity to 80% relative humidity, while slightly thermal conditions are slightly above ambient temperature (e.g., 32°C to 35°C) but, in the case of a 1K composition, generally are below the curing temperature for the coating composition, i.e., are generally below those at which the reactive components will readily react and cure.

As used herein, the term "two-component" or "2K" refers to a composition in which at least a portion of the reactive components readily associate to form an interaction or react to form a bond (physically or chemically), and at least partially cure without activation from an external energy source, such as at ambient or slightly thermal conditions, when mixed. One of skill in the art understands that the two components of the composition are stored separately from each other and mixed just prior to application of the composition. Two-component compositions may optionally be heated or baked, as described below.

As used herein, the term "cure" or "curing", means that the components that form the composition are crosslinked to form a material, such as a coating, a layer, pottant, pad or the like. As used herein, the term "at least partially cured" means that at least a portion of the components that form the composition interact, react, and/or are crosslinked to form the material. The composition is at least partially cured or cured when the components of the composition are mixed, resulting in at least a partial reaction of the reactive functional groups of the components of the composition.

The term "curable", as used for example in connection with a curable composition, means that the indicated composition is polymerizable or cross linkable through functional groups, e.g., by means that include, but are not limited to, cure under ambient or slightly thermal conditions and/or catalytic exposure.

"Curable under ambient conditions" means that the composition undergoes a thermosetting reaction at room temperature and humidity conditions, e.g., without the aid of heat or other energy, for example, without baking in an oven, use of forced air, or the like.

As used herein, unless indicated otherwise, the term "substantially free" means that a particular material is not purposefully added to a mixture or composition, respectively, and is only present as an impurity in a trace amount of less than 5% by weight based on a total weight of the mixture or composition, respectively. As used herein, unless indicated otherwise, the term "essentially free" means that a particular material is only present in an amount of less than 2% by weight based on a total weight of the mixture or composition, respectively. As used herein, unless indicated otherwise, the term "completely free" means that a mixture or composition, respectively, does not comprise a particular material, i.e., the mixture or composition comprises 0% by weight of such material.

Coatings and Coated Substrates

Disclosed herein are coated substrates comprising a coating layer and an adhesive formed on at least a portion of the coating layer. As described in more detail below, the coating layer may be deposited from a powder coating composition and the adhesive may be deposited from an adhesive composition.

The coating layer may comprise a dielectric strength of at least 50 kV/mm measured using a Sefelec Dielectric Strength Tester (RMG12AC-DC; voltage limit 12.0 kV DC, Imax Limit 0.1 mA, 19 sec ramp, 20 sec dwell, 2 sec fall) according to ASTM D149-09, such as at least 60 kV/mm. The coating layer may comprise a dielectric strength of no more than 120 kV/mm measured using a Sefelec Dielectric Strength Tester (RMG12AC-DC; voltage limit 12.0 kV DC, Imax Limit 0.1 mA, 19 sec ramp, 20 sec dwell, 2 sec fall) according to ASTM D149-09, such as no more than 100 kV/mm. The coating layer may comprise a dielectric strength of 50 kV/mm to 120 kV/mm measured using a Sefelec Dielectric Strength Tester (RMG12AC-DC; voltage limit 12.0 kV DC, Imax Limit 0.1 mA, 19 sec ramp, 20 sec dwell, 2 sec fall) according to ASTM D149-09, such as 60 kV/mm to 100 kV/mm.

The coating layer may comprise a thermal conductivity of at least 0.3 W/K·m measured using a TIM Thermal Resistance and Conductivity Measurement Apparatus (model LW-9389) according to ASTM D5470 (steady-state methods), such as at least 0.35 W/K·m. The coating layer may comprise a thermal conductivity of no more than 0.5 W/K·m measured using a TIM Thermal Resistance and Conductivity Measurement Apparatus (model LW-9389) according to ASTM D5470 (steady-state methods), such as no more than 0.45 W/K·m.The coating layer may comprise a thermal conductivity of 0.3 W/K·m to 0.5 W/K·m measured using a TIM Thermal Resistance and Conductivity Measurement Apparatus (model LW-9389) according to ASTM D5470 (steady-state methods), such as 0.35 W/K·m to 0.45 W/K·m.

The coating layer may comprise a dielectric breakdown of at least 12 kV/mm measured using a Sefelec Dielectric Strength Tester (RMG12AC-DC; voltage limit 12.0 kV DC, Imax Limit 0.1 mA, 19 sec ramp, 20 sec dwell, 2 sec fall) according to ASTM D149-09, such as at least 15 kV/mm, such as at least 20 kV/mm, such as at least 25 kV/mm, such as at least 30 kV/mm.

The powder coating compositions can be applied by any means standard in the art, such as spraying, electrostatic spraying, a fluidized bed process, and the like. The powder coating compositions can also be applied in multiple applications over a substrate (a "multi-application process"). For instance, a first powder coating composition can be applied over at least a portion of a substrate. A second powder coating composition can be applied over at least a portion of the first coating composition. The first powder coating composition can optionally be cured or at least partially cured before applying the second powder coating composition. Alternatively, the second powder coating composition can be applied over at least a portion of the first coating composition. The first and second powder coating composition can then be cured together at the same time.

It is appreciated that the powder coating composition can be cured with multiple types of heat sources such as both convection heating and infrared radiation. For example, the powder coating composition can be partially cured with convection heating or infrared radiation, and then completely cured with a different heat source chosen from convection heating and infrared radiation.

In some examples, the powder coating composition can be cured with heat, such convection heating within a range of 120 °C to 260 °C, such as 160 °C to 240 °C, such as 180 °C to 200 °C, for 1 minute to 40 minutes. The powder coating composition can also be cured with infrared radiation in which peak metal temperatures can reach 200°C to 260°C in about 10 seconds. The elevated heat ramping with infrared radiation allows for fast cure times. In some examples, the powder coating composition is cured with infrared radiation to heat the composition within a range of from 140°C to 180°C for 1 to 20 minutes.

Coatings formed from a single powder coating composition can be applied at any desired dry film thickness. For example, the dry film thickness may be at least 50 microns, such as at least 75 microns, such as at least 100 microns. For example, the dry film thickness may be no more than 300 microns, such as no more than 250 microns, such as no more than 200 microns. The dry film thickness may be 50 microns to 300 microns, such as 75 microns to 250 microns, such as 100 microns to 200 microns, such as 100 microns to 220 microns. It is appreciated that, when multiple powder coating compositions are applied, each composition can be applied to separately provide any of the previously described dry film thicknesses. For instance, when two separate powder coating compositions are applied, each individual powder coating composition can be applied at any of the previously described dry film thicknesses.

The adhesive may comprise a thermal conductivity of at least 0.7 W/K·m measured using a TIM Thermal Resistance and Conductivity Measurement Apparatus (model LW-9389) according to ASTM D5470 (steady-state methods), such as at least 0.8 W/K·m, such as at least 0.9 W/K·m, such as at least 1.0 W/K·m, such as at least 1.5 W/K·m.The coating layer may comprise a thermal conductivity of no more than 2.5 W/K·m measured using a TIM Thermal Resistance and Conductivity Measurement Apparatus (model LW-9389) according to ASTM D5470 (steady-state methods), such as no more than 2.0 W/K·m. The coating layer may comprise a thermal conductivity of 0.7 W/K·m to 2.5 W/K·m measured using a TIM Thermal Resistance and Conductivity Measurement Apparatus (model LW-9389) according to ASTM D5470 (steady-state methods), such as 0.8 W/K·m to 2.5 W/K·m, such as 0.9 W/K·m to 2.5 W/K·m, such as 1.0 W/K·m to 2.5 W/K·m, such as 1.5 to 2.5 W/K·m, such as 0.7 W/K·m to 2.0 W/K·m such as 0.8 W/K·m to 2.0 W/K·m, such as 0.9 W/K·m to 2.0 W/K·m, such as 1.0 W/K·m to 2.0 W/K·m, such as 1.5 to 2.0 W/K·m,

The adhesive may comprise a dielectric breakdown of at least 6 kV/mm measured using a Sefelec Dielectric Strength Tester (RMG12AC-DC; voltage limit 12.0 kV DC, Imax Limit 0.1 mA, 19 sec ramp, 20 sec dwell, 2 sec fall) according to ASTM D149-09, such as at least 6 kV/mm. The adhesive may comprise a dielectric breakdown of no more than 20 kV/mm measured using a Sefelec Dielectric Strength Tester (RMG12AC-DC; voltage limit 12.0 kV DC, Imax Limit 0.1 mA, 19 sec ramp, 20 sec dwell, 2 sec fall) according to ASTM D149-09, such as no more than 17 kV/mm. The adhesive may comprise a dielectric breakdown of 6 kV/mm to 20 kV/mm measured using a Sefelec Dielectric Strength Tester (RMG12AC-DC; voltage limit 12.0 kV DC, Imax Limit 0.1 mA, 19 sec ramp, 20 sec dwell, 2 sec fall) according to ASTM D149-09, such as 10 kV/mm to 17 kV/mm.

The adhesive may comprise a lap shear strength of at least 3 MPa measured according to ASTM D1002-10 using an Instron 5567 machine in tensile mode with a pull rate of 1 mm per minute, such as at least 8 MPa. The adhesive may comprise a lap shear strength of no more than 30 MPa measured according to ASTM D1002-10 using an Instron 5567 machine in tensile mode with a pull rate of 1 mm per minute, such as no more than 12 MPa. The adhesive may comprise a lap shear strength of 3 MPa to 30 MPa measured according to ASTM D1002-10 using an Instron 5567 machine in tensile mode with a pull rate of 1 mm per minute, such as 8 MPa to 12 MPa.

The adhesive compositions may be applied by any means standard in the art, such as brushes, rollers, films, pellets, trowels, spatulas, dips, spray guns and applicator guns to form a coating on at least a portion of the coating described above. An adhesive is typically formed when a composition that is deposited onto at least a portion of the substrate surface is at least partially dried or cured by methods known to those of ordinary skill in the art (e.g., under ambient conditions or by exposure to thermal heating).

For example, the adhesive composition may be allowed to cure at room temperature or slightly thermal conditions and/or the composition may be cured by baking and/or curing at elevated temperature, such as at a temperature of 180°C or below, such as 130°C or below, such as 110°C or below, such as 100°C or below, such as 90°C or below, such as 80°C or below, such as 70°C or below, but greater than ambient, such as greater than 40°C, such as greater than 50°C, and for any desired time period (e.g., from 5 minutes to 1 hour) sufficient to at least partially cure the composition on the substrate(s). Alternatively, the adhesive composition may cure at ambient or slightly above ambient conditions and optionally may be baked and/or further cured at elevated temperatures, such as those described above.

The adhesives formed from an adhesive composition can be applied at any desired dry film thickness. For example, the dry film thickness may be at least 0.2 mm, such as at least 0.3 mm, such as at least 0.4 mm. The dry film thickness may be no more than 3.0 mm, such as no more than 1.5 mm, such as no more than 1.0 mm. The dry film thickness may be 0.2 mm to 3.0 mm, such as 0.3 mm to 1.5 mm, such as 0.4 mm to 1.0 mm.

### Systems

Also disclosed herein are systems for coating a substrate comprising a powder coating composition and an adhesive composition. As described in more detail below, the powder coating composition may comprise an electrically insulative filler and the adhesive composition may comprise a thermally conductive filler.

### Powder Coating Compositions

The coating may be deposited from a powder coating composition comprising, or consisting essentially of, or consisting of: an electrically insulative filler; and a (meth)acrylate resin, a polyurethane, a polyester, a polyamide, a polyether, a polysiloxane, an epoxy resin, a vinyl resin, copolymers thereof, and/or combinations thereof.

The powder coating composition comprises a binder. The binder comprises one or more film-forming resins that can be used to form the coating layer. The powder coating compositions include any of a variety of thermosetting powder coating compositions known in the art. The powder coating compositions can also include thermoplastic powder coating compositions.

Non-limiting examples of suitable film-forming resins that form at least a portion of the binder of the powder coating composition include (meth)acrylate resins, polyurethanes, polyesters, polyamides, polyethers, polysiloxanes, epoxy resins, vinyl resins, copolymers thereof, and combinations thereof. As used herein, "(meth)acrylate" and like terms refers both to the acrylate and the corresponding methacrylate. Further, the film-forming resins can have any of a variety of functional groups including, but not limited to, carboxylic acid groups, amine groups, epoxide groups, hydroxyl groups, thiol groups, carbamate groups, amide groups, urea groups, isocyanate groups (including blocked isocyanate groups), ethylenically unsaturated groups, and combinations thereof.

Thermosetting coating compositions typically comprise a crosslinker that may be selected from any of the crosslinkers known in the art to react with the functionality of one or more film-forming resins used in the powder coating composition. Non-limiting examples of crosslinkers include phenolic resins, amino resins, epoxy resins, triglycidyl isocyanurate, beta-hydroxy (alkyl) amides, alkylated carbamates, (meth)acrylates, salts of poly carboxylic acids with cyclic amidine, o-tolyl biguanide, isocyanates, blocked isocyanates, polyacids, anhydrides, organometallic acid-functional materials, polyamines, polyamides, aminoplasts, carbodiimides, oxazolines, and combinations thereof.

Suitable examples of resins useful in the powder coating compositions are discussed in PCT Publ. No. WO 2021/173941A1, pars. [0006] to [0042], [0057] to [0068], [0088] to [0105] and [0128] to [0139], incorporated herein by reference.

The electrically insulative filler may be thermally conductive filler or non-thermally conductive filler. As used herein, the term "electrically insulative filler" means a pigment, filler, or inorganic powder that has a volume resistivity of at least 10 Ω·m (measured according to ASTM D257, C611, or B193). For example, the electrically insulative filler may have a volume resistivity of at least 10 Ω·m (measured according to ASTM D257, C611, or B193), such as at least 20 Ω·m, such as at least 30 Ω·m, such as at least 40 Ω·m, such as at least 50 Ω·m, such as at least 60 Ω·m, such as at least 60 Ω·m, such as at least 70 Ω·m, such as at least 80 Ω·m, such as at least 80 Ω·m, such as at least 90 Ω·m, such as at least 100 Ω·m.

The electrically insulative filler may comprise a thermally conductive, electrically insulative filler material. As used herein, the term "thermally conductive, electrically insulative filler" or "TC/EI filler" means a pigment, filler, or inorganic powder that has a thermal conductivity of at least 5 W/m·K at 25°C (measured according to ASTM D7984) and a volume resistivity of at least 10 Ω·m (measured according to ASTM D257, C611, or B193). The TC/EI filler material may comprise organic or inorganic material and may comprise particles of a single type of filler material or may comprise particles of two or more types of TC/EI filler materials. That is, the TC/EI filler material may comprise particles of a first TC/EI filler material and may further comprise particles of at least a second (i.e., a second, a third, a fourth, etc.) TC/EI filler material that is different from the first TC/EI filler material. As used herein with respect to types of filler material, reference to "first," "second", etc. is for convenience only and does not refer to order of addition or the like.

The TC/EI filler material may have a thermal conductivity of at least 5 W/m·K at 25°C (measured according to ASTM D7984), such as at least 18 W/m·K, such as at least 55 W/m·K. The TC/EI filler material may have a thermal conductivity of no more than 3,000 W/m·K at 25°C (measured according to ASTM D7984), such as no more than 1,400 W/m·K, such as no more than 450 W/m·K. The TC/EI filler material may have a thermal conductivity of 5 W/m·K to 3,000 W/m·K at 25°C (measured according to ASTM D7984), such as 18 W/m·K to 1,400 W/m·K, such as 55 W/m·K to 450 W/m·K.

The TC/EI filler material may have a volume resistivity of at least 10 Ω·m (measured according to ASTM D257, C611, or B193), such as at least 20 Ω·m, such as at least 30 Ω·m, such as at least 40 Ω·m, such as at least 50 Ω·m, such as at least 60 Ω·m, such as at least 60 Ω·m, such as at least 70 Ω·m, such as at least 80 Ω·m, such as at least 80 Ω·m, such as at least 90 Ω·m, such as at least 100 Ω·m.

Suitable non-limiting examples of TC/EI filler materials include nitrides, metal oxides, metalloid oxides, metal hydroxides, arsenides, carbides, minerals, ceramics, and diamond. For example, the TC/EI filler material may comprise, consist essentially of, or consist of boron nitride, silicon nitride, aluminum nitride, boron arsenide, aluminum oxide, magnesium oxide, dead burned magnesium oxide, beryllium oxide, silicon dioxide, titanium oxide, zinc oxide, nickel oxide, copper oxide, tin oxide, aluminum hydroxide (i.e., aluminum trihydrate), magnesium hydroxide, boron arsenide, silicon carbide, agate, emery, ceramic microspheres, diamond, or any combination thereof. Non-limiting examples of commercially available TC/EI filler materials of boron nitride include, for example, CarboTherm from Saint-Gobain, CoolFlow and PolarTherm from Momentive, and as hexagonal boron nitride powder available from Panadyne; of aluminum nitride, for example, aluminum nitride powder available from Micron Metals Inc., and as Toyalnite from Toyal; of aluminum oxide include, for example, Microgrit from Micro Abrasives, Nabalox from Nabaltec, Aeroxide from Evonik, and as Alodur from Imerys; of dead burned magnesium oxide include, for example, MagChem^{®} P98 from Martin Marietta Magnesia Specialties; of aluminum hydroxide include, for example, APYRAL from Nabaltec GmbH and aluminum hydroxide from Sibelco; and of ceramic microspheres include, for example, ceramic microspheres from Zeeospheres Ceramics or 3M. These fillers can also be surface modified. For example, surface modified magnesium oxide available as PYROKISUMA 5301K available from Kyowa Chemical Industry Co., Ltd. Alternatively, the TC/EI filler materials may be free of any surface modification.

As used herein, the term "dead burned magnesium oxide" refers to magnesium oxide that has been calcined at high-temperatures (e.g., ranging from 1500°C - 2000°C in a high temperature shaft kiln) yielding a material with very little reactivity relative to magnesium oxide that has not been calcined.

The TC/EI filler material may be included as a single TC/EI filler material or may be included as a combination of two or more of the TC/EI filler materials described above.

The electrically insulative filler may comprise a non-thermally conductive, electrically insulative filler material. As used herein, the term "non-thermally conductive, electrically insulative filler" or "NTC/EI filler" means a pigment, filler, or inorganic powder that that has a thermal conductivity of less than 5 W/m·K at 25°C (measured according to ASTM D7984) and a volume resistivity of at least 10 Ω·m (measured according to ASTM D257, C611, or B193). For example, the NTC/EI filler may have a thermal conductivity of less than 5 W/m·K at 25°C (measured according to ASTM D7984, such no more than 3 W/m K , such as no more than 1 W/mK, such as no more than 0.1 W/mK, such as no more than 0.05 W/mK. For example, the NTC/EI filler may have a volume resistivity of at least 10 Ω·m (measured according to ASTM D257, C611, or B193), such as at least 20 Ω·m, such as at least 30 Ω·m, such as at least 40 Ω·m, such as at least 50 Ω·m, such as at least 60 Ω·m, such as at least 60 Ω·m, such as at least 70 Ω·m, such as at least 80 Ω·m, such as at least 80 Ω·m, such as at least 90 Ω·m, such as at least 100 Ω·m. The NTC/EI filler material may be organic or inorganic.

Suitable non-limiting examples of NTC/EI filler materials include but are not limited to mica, silica, wollastonite, barium sulfate, calcium carbonate, glass microspheres, clay, or any combination thereof.

As used herein, the term "mica" generally refers to sheet silicate (phyllosilicate) minerals. The mica may comprise muscovite mica. Muscovite mica comprises a phyllosilicate mineral of aluminum and potassium with the formula KAl₂(AlSi₃O₁₀)(F,OH)₂ or (KF)₂(Al₂O₃)₃(SiO₂)₆(H₂O). Exemplary non-limiting commercially available muscovite mica include products sold under the trade name DakotaPURE^{™}, such as DakotaPURE^{™} 700, DakotaPURE^{™} 1500, DakotaPURE^{™} 2400, DakotaPURE^{™} 3000, DakotaPURE^{™} 3500 and DakotaPURE^{™} 4000, available from Pacer Minerals.

The silica (SiO₂) may comprise fumed silica which comprises silica that has been treated with a flame to form a three-dimensional structure. The fumed silica may be untreated or surface treated with a siloxane, such as, for example, polydimethylsiloxane. Exemplary non-limiting commercially available fumed silica includes products solder under the trade name AEROSIL^{®}, such as AEROSIL^{®} R 104, AEROSIL^{®} R 106, AEROSIL^{®} R 202, AEROSIL^{®} R 208, AEROSIL^{®} R 972 commercially available from Evonik Industries and products sold under the trade name HDK^{®} such as HDK^{®} H17 and HDK^{®} H18 commercially available from Wacker Chemie AG.

Wollastonite comprises a calcium inosilicate mineral (CaSiO₃) that may contain small amounts of iron, aluminum, magnesium, manganese, titanium and/or potassium. For example, the wollastonite may have a B.E.T. surface area of 1.5 to 2.1 m²/g, such as 1.8 m²/g and a median particle size of 6 microns to 10 microns, such as 8 microns. Non-limiting examples of commercially available wollastonite include NYAD 400 available from NYCO Minerals, Inc.

The calcium carbonate (CaCO₃) may comprise a precipitated calcium carbonate or a ground calcium carbonate. The calcium carbonate may or may not be surface treated with stearic acid. Non-limiting examples of commercially available precipitated calcium carbonate include Ultra-Pflex^{®}, Albafil^{®}, and Albacar HO^{®} available from Specialty Minerals and Winnofil^{®} SPT available from Solvay. Non-limiting examples of commercially available ground calcium carbonate include Duramite^{™} available from IMERYS and Marblewhite^{®} available from Specialty Minerals.

Useful clay minerals include a non-ionic platy filler such as talc, pyrophyllite, chlorite, vermiculite, or combinations thereof.

The glass microspheres may be hollow borosilicate glass. Non-limiting examples of commercially available glass microspheres include 3M Glass bubbles type VS, K series, and S series available from 3M.

The electrically insulative filler material may have any particle shape or geometry. For example, the electrically insulative filler material may be a regular or irregular shape and may be spherical, ellipsoidal, cubical, platy, acicular (elongated or fibrous), rod-shaped, disk-shaped, prism-shaped, flake-shaped, rock-like, etc., agglomerates thereof, and any combination thereof.

Particles of electrically insulative filler material may have a reported average particle size in at least one dimension of at least 0.01 microns, as reported by the manufacturer, such as at least 2 microns, such as at least 10 microns. Particles of electrically insulative filler material may have a reported average particle size in at least one dimension of no more than 500 microns as reported by the manufacturer, such as no more than 300 microns, such as no more than 200 microns, such as no more than 150 microns. The particles of electrically insulative filler material may have a reported average particle size in at least one dimension of 0.01 microns to 500 microns as reported by the manufacturer, such as 0.1 microns to 300 microns, such as 2 microns to 200 microns, such as 10 microns to 150 microns. Suitable methods of measuring average particle size include measurement using an instrument such as the Quanta 250 FEG SEM or an equivalent instrument.

Particles of electrically insulative filler material of the powder coating composition may have a reported Mohs hardness of at least 1 (based on the Mohs Hardness Scale), such as at least 2, such as at least 3. Particles of electrically insulative filler material of the powder coating composition may have a reported Mohs hardness of no more than 10, such as no more than 8, such as no more than 7. Particles of electrically insulative filler material of the powder coating composition may have a reported Mohs hardness of 1 to 10, such as 2 to 8, such as 3 to 7.

The powder coating composition may comprise the electrically insulative filler material in an amount of at least 30 percent by weight based on total weight of the powder coating composition, such as at least 45 percent by weight, such as at least 50 percent by weight. The powder coating composition may comprise the electrically insulative filler material in an amount of no more than 60 percent by weight based on total weight of the powder coating composition, such as no more than 55 percent by weight, such as no more than 50 percent by weight. The powder coating composition may comprise the electrically insulative filler material in an amount of 30 percent by weight to 60 percent by weight based on total weight of the powder coating composition, such as 45 percent by weight to 55 percent by weight, such as 45 percent by weight to 50 percent by weight, such as 50 percent by weight to 55 percent by weight.

Powder coating compositions can comprise a flame retardant or combination of flame retardants. Certain TC materials described above such as aluminum hydroxide and magnesium hydroxide, for example, also may be flame retardants. As used herein, "flame retardant" refers to a material that slows down or stops the spread of fire or reduces its intensity. Flame retardants may be available as a powder that may be mixed with a composition, a foam, or a gel. In examples, when the powder coating compositions include a flame retardant, such compositions may form a coating on a substrate surface and such coating may function as a flame retardant.

As set forth in more detail below, a flame retardant can include a mineral, an organic compound, an organohalogen compound, an organophosphorous compound, or a combination thereof. Suitable examples of minerals include huntite, hydromagnesite, various hydrates, red phosphorous, boron compounds such as borates, carbonates such as calcium carbonate and magnesium carbonate, and combinations thereof. Suitable examples of organohalogen compounds include organochlorines such as chlorendic acid derivatives and chlorinated paraffins; organobromines such as decabromodiphenyl ether (decaBDE), decabromodiphenyl ethane (a replacement for decaBDE), polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD). Such halogenated flame retardants may be used in conjunction with a synergist to enhance their efficiency. Other suitable examples include antimony trioxide, antimony pentaoxide, and sodium antimonate. Suitable examples of organophosphorous compounds include triphenyl phosphate (TPP), resorcinol bis(diphenylphosphate) (RDP), bisphenol A diphenyl phosphate (BADP), and tricresyl phosphate (TCP); phosphonates such as dimethyl methylphosphonate (DMMP); and phosphinates such as aluminum diethyl phosphinate. In one important class of flame retardants, compounds contain both phosphorus and a halogen. Such compounds include tris(2,3-dibromopropyl) phosphate (brominated tris) and chlorinated organophosphates such as tris(1,3-dichloro-2-propyl)phosphate (chlorinated tris or TDCPP) and tetrakis(2-chlorethyl)dichloroisopentyldiphosphate (V6). Suitable examples of organic compounds include carboxylic acid, dicarboxylic acid, melamine, and organonitrogen compounds. Other suitable flame retardants include ammonium polyphosphate and barium sulfate.

### Adhesive Compositions

The adhesive may be deposited from an adhesive composition comprising, or consisting essentially of, or consisting of: a thermally conductive filler; and a compound comprising an electrophilic functional group, a thiol-terminated compound, a thermoplastic polymer or any combination thereof.

The adhesive composition may be a one-component adhesive composition, a two-component composition, or a multi-component composition (i.e., more than two components).

Suitable electrophilic functional groups useful in the adhesive compositions disclosed herein include epoxide functional groups, carbonate functional groups, isocyanate functional groups, keto functional groups, aziridine functional groups, thiirane functional groups, cyclic lactone functional groups, and carbodiimide functional groups. The adhesive composition may further comprise a second compound comprising a nucleophilic functional group. The second molecule may be monofunctional or polyfunctional. The second molecule may be a monomer, a small molecule, or a polymer. Suitable nucleophilic functional groups include active hydrogen functional groups including amine functional groups, hydroxy functional groups, thiol functional groups, carboxy functional groups, anhydride functional groups, acetoacetate (ACAC) functional groups, and combinations thereof. Suitable molecules comprising nucleophilic functional groups may comprise an amine, a thiol, an alcohol, a polyol, a carboxylic acid, an anhydride, or combinations thereof. The nucleophilic functional group may be blocked or unblocked or encapsulated or unencapsulated.

Suitable thiol-terminated compounds that may be used in the adhesive compositions include monomers, polymers and/or oligomers.

The composition may comprise a thermoplastic polymer. Suitable thermoplastic polymers include polyamides, such as nylon and aramid; polyolefins, such as polybutadiene, polyisobutylene, polybutene, polymethylpentene, amorphous polypropylene, polyethylene terephthalate, polyethylene, polystyrene, ethylene propylene copolymer, polyvinyl chloride, and vinyl chloride copolymer; polyurethanes; styrene block copolymers, such as styrene-butadiene, styrene-isoprene, styrene- butadiene- styrene, styrene-isoprene-styrene, styrene-ethylene/butylene-styrene, styrene- ethylene/propylene; polyethers such as polyethylene oxide, polypropylene oxide, polyoxymethylene, poly(p-phenylene ether); ethylene-vinylacetate; polybenzimidazole; polyphenylene sulfide; polyether sulfone; polyether ether ketone; chloroprene; acrylonitrile butadiene; polycarbonate; polyacrylates such as poly(meth)acrylate; or combinations thereof. In examples, useful non-reactive elastomers include Polyvest^{®} polybutadiene available from Evonik. Examples of reactive elastomers include Hypro^{®} ATBN amine-functional butadiene copolymer available from Emerald Performance Materials. Suitable examples of thermoplastic elastomers include olefmic thermoplastic elastomers, polyether block amides polybutadiene thermoplastics elastomer, polyester thermoplastic elastomer, styrenic thermoplastic elastomer, and vinyl thermoplastic elastomers, and rubbers such as butadiene rubber, butyl rubber, bromobutyl rubber, chlorobutyl rubber, polyisobutylene rubber, chlorosuflonated polyethylene rubber, epichlorohydrin rubber, ethylene-propylene rubber, fluoroelastomer (vinylidene fluoride-hexafluoropropylene copolymer), natural rubber, neoprene rubber, nitrile rubber, polysulfide rubber, polyurethane rubber, silicone rubber, styrene-butadiene rubber.

The adhesive composition may comprise a hydrolysable component. The hydrolysable component may comprise a silane-containing polymer, a silyl-containing polymer, an imine, or combinations thereof. The silane-containing polymer may comprise a polythioether, a polyester, a polyether, a polyisocyanate, a poly(meth)acrylate, a polyolefin, a polyurea, a polyurethane, or combinations thereof. The silane-containing polymer may comprise an alkoxy group, an acyloxy group, a halogen group, an amino group, or combinations thereof. The silyl-containing polymer may comprise an alkyl group, a phenyl group, or combinations thereof. The silyl-containing polymer may comprise a polythioether, a polysulfide, a thiol ester, a thiol polyacrylate, or combinations thereof. The imine may comprise a ketimine, an aldimine, or combinations thereof.

The adhesive compositions optionally may comprise any of a variety of accelerators, elastomeric particles, additives, plasticizers, solvents and the like known in the art.

Suitable examples of compounds useful in the adhesive composition are discussed in: PCT Publ. No. WO 2021/211694A1, pars. [0022] to [0046], [0055] to [0059], [0062] to [0138], [0204] and [0206]; PCT Publ. No. WO 2021/211184A1, pars. [0019] to [0035], [0044] to [0051], [0056], [0061] to [0080], [0110] to [0127], [0135] to [0141], [0144] to [0146] and [0150] to [0152]; PCT Publ. No. WO 2021/211183A1, pars. [0017] to [0030], [0040] to [0043], [0046] to [0050], [0081] to [0093], [0101] to [0107], and [0111] to [0113]; and PCT Publ. No. WO 2021/211722A1, pars. [0018] to [0035], [0044] to [0056], [0061], [0062], [0068] to [0172], [0203] to [0225], [0233] to [0240] and [0245]; all of which are incorporated herein by reference.

The adhesive composition may comprise a thermally conductive filler. The thermally conductive filler may be an electrically insulative filler. Suitable TC/EI filler include any of those described above with respect to the powder coating compositions.

The thermally conductive filler may be present in the adhesive composition in an amount of at least 60 percent by weight based on total weight of the adhesive composition, such as at least 75 percent by weight. The thermally conductive filler may be present in the adhesive composition in an amount of no more than 90 percent by weight based on total weight of the composition, such as no more than 86 percent by weight. The thermally conductive filler may be present in the adhesive composition in an amount of 60 percent by weight to 90 percent by weight based on total weight of the adhesive composition, such as 75 percent by weight to 86 percent by weight.

The adhesive composition may further comprise non-thermally conductive, electrically insulative filler. Suitable NTC/EI filler useful in the adhesive compositions include any of the NTC/EI filler described above with respect to the powder coating compositions.

The adhesive composition may further comprise flame retardants. Suitable flame retardants for use in the adhesive compositions include any of the flame retardants described above with respect to the powder coating compositions.

### Substrates

The substrate may be selected from a wide variety of substrates and combinations thereof. Non-limiting examples of substrates include vehicles including automotive substrates, industrial substrates, marine substrates and components such as ships, vessels, and on-shore and off-shore installations, storage tanks, packaging substrates, architectural substrates, aerocraft and aerospace components, electrical storage devices, batteries and battery components, bus bars, metal wires, copper or aluminum conductors, nickel conductors, wood flooring and furniture, fasteners, coiled metals, heat exchangers, vents, an extrusion, roofing, wheels, grates, belts, conveyors, grain or seed silos, wire mesh, bolts or nuts, a screen or grid, HVAC equipment, frames, tanks, cords, wires, apparel, electronics and electronic components including housings and circuit boards, glass, sports equipment, including golf balls, stadiums, buildings, bridges, containers such as a food and beverage containers, and the like.

The substrates, including any of the substrates previously described, can be metallic or non-metallic. Metallic substrates include, but are not limited to, tin, steel, cold rolled 61 steel, hot rolled steel, steel coated with zinc metal, zinc compounds, zinc alloys, electrogalvanized steel, hot-dipped galvanized steel, galvanealed steel, galvalume, steel plated with zinc alloy, stainless steel, zinc-aluminum-magnesium alloy coated steel, zinc-aluminum alloys, aluminum, aluminum alloys, aluminum plated steel, aluminum alloy plated steel, steel coated with a zinc-aluminum alloy, magnesium, magnesium alloys, nickel, nickel plating, bronze, tinplate, clad, titanium, brass, copper, silver, gold, 3-D printed metals, cast or forged metals and alloys, or combinations thereof.

As used herein, "vehicle" or variations thereof include, but are not limited to, civilian, commercial and military aircraft, and/or land vehicles such as airplanes, helicopters, cars, motorcycles, trucks and/or bicycles, such as electronic bicycles. The shape of the substrate can be in the form of a sheet, plate, bar, rod or any shape desired.

As discussed above, the substrate may comprise a battery or a battery component. The battery may be, for example, an electric vehicle battery, and the battery component may be an electric vehicle battery component. The battery component may comprise, but is not limited thereto, a battery cell, a battery shell, a battery module, a battery pack, a battery box, a battery cell casing, a pack shell, a battery lid and tray, a thermal management system, an inverter, a battery housing, a module housing, a module racking, a battery side plate, a battery cell enclosure, a cooling module, a cooling tube, a cooling fin, a cooling plate, a bus bar, a battery frame, an electrical connection, metal wires, copper or aluminum conductors or cables, any part of a stationary energy storage system, or any combination thereof.

As described above, the adhesive coating composition and powder coating composition may be applied over any of these substrates to form an electrically insulating coating (i.e., dielectric coating), a thermally conductive coating, or an electrically insulating and thermally conductive coating, as described herein.

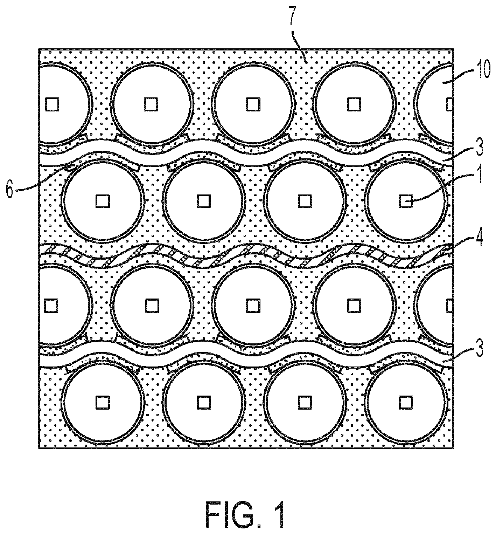

As illustrated in FIGS. 1 to 9, a coating layer may be deposited onto surface of a substrate from one of the powder coating compositions disclosed herein. An adhesive may be formed from the application of one of the adhesive compositions disclosed herein on at least a portion of the coating layer such that the adhesive is between the coating layer and a surface of a second substrate.

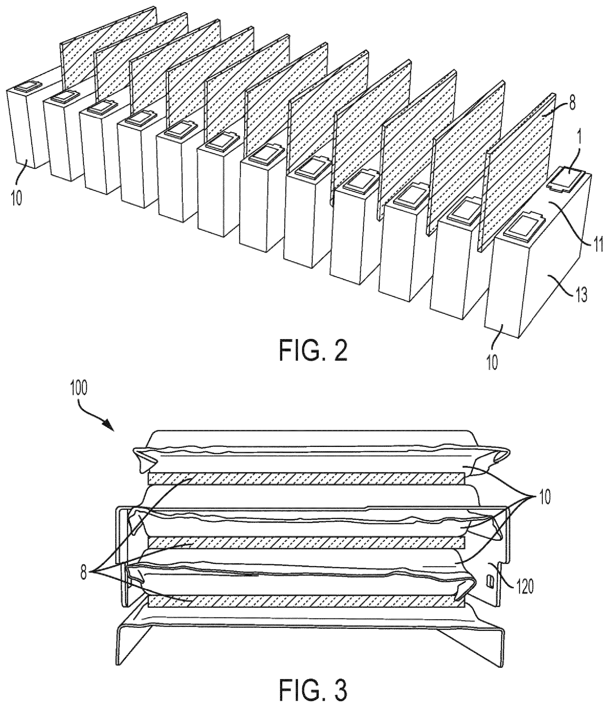

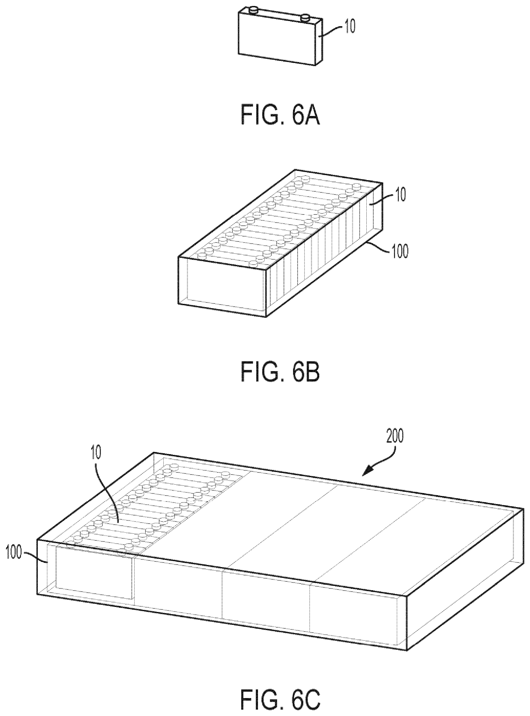

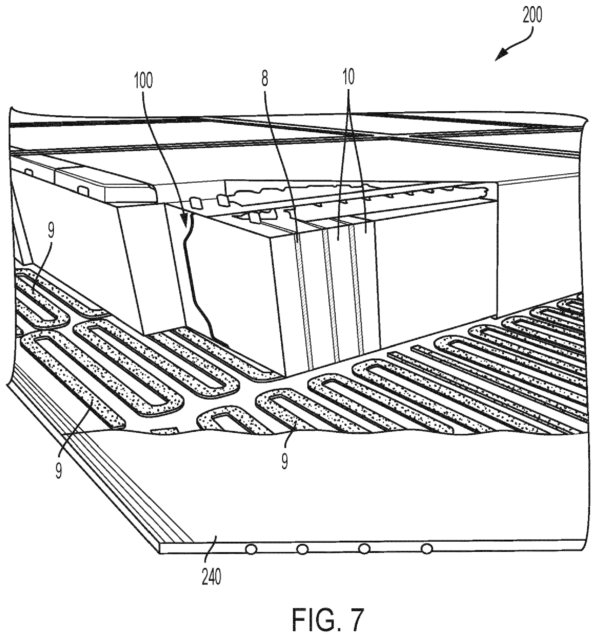

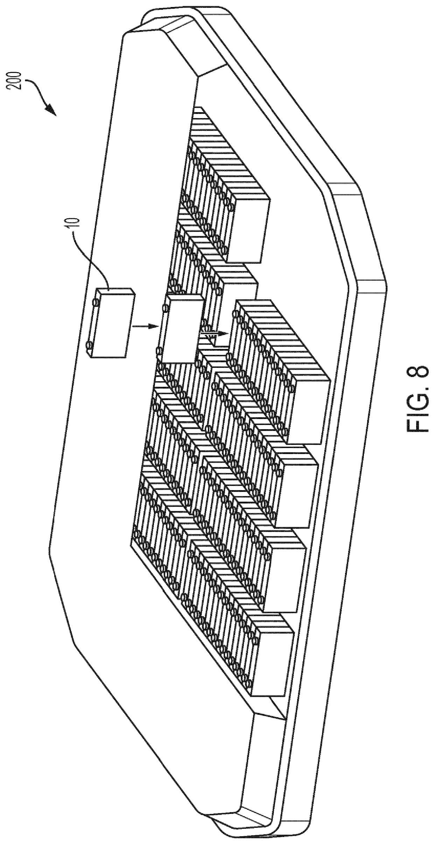

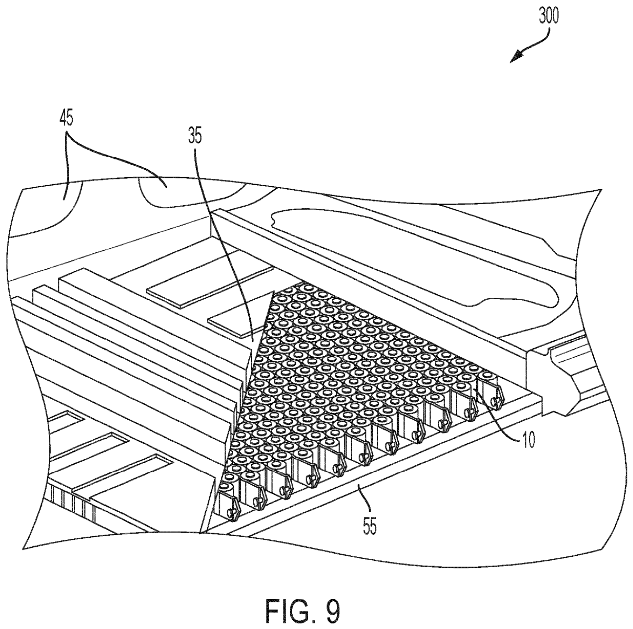

FIGS. 1 to 9 illustrate non-limiting examples of battery assembly components and constructions as well as non-limiting applications or use of compositions as disclosed herein in said battery assemblies. Although FIGS. 1 to 9 illustrate specific examples of cell shapes and cell arrangements, cells may be arranged in any configuration known to those skilled in the art. Additionally, the cured compositions may be used to form pads, adhesives, coatings, pottants and the like, to provide thermal protection between battery cells, within battery modules and/or within battery packs. These materials may be used on any surface or in any space within such battery assemblies. For example, compositions disclosed herein also may be useful in battery assemblies including, but not limited to, cell to module (FIGS. 3, 4, 6B), module to pack (FIGS. 6C, 7), cell to pack (FIG. 8), and cell to chassis battery assemblies (FIG. 9). Such battery assemblies may be used in, but not limited to, any aforementioned application.

Battery assemblies may be any combination of one or more battery cells, the interconnects which provide electrical conductivity between them, as well as ancillary components such as, in non-limiting examples, control electronics and components that ensure the necessary structural mechanical and environmental requirements for the operation of a specific battery (for example, without limitation, cell interconnectors such as wires, battery pack enclosures including trays and lids, module enclosures, module frames and frame plates, module racking, cooling and heating components including cooling plates, cooling fins, and cooling tubes, electrical busbars, battery management systems, battery thermal management systems, chargers, inverters and converters).

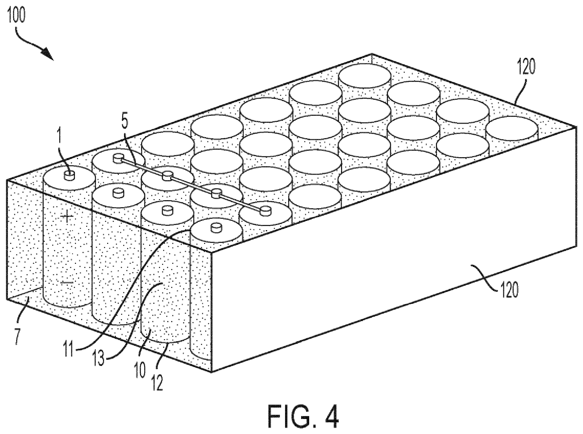

Battery cells **10** are generally single unit energy storage containers that may be connected in series or in parallel. Battery cells may be any suitable size or shape known to those skilled in the art, such as but not limited to, cylindrical (FIGS. 1, 4 and 9), prismatic (FIGS. 2, 5-8) and/or pouch (FIG. 3). Battery cells **10** are enclosed to provide desired mechanical protection and environmental isolation of the cell. For example, cylindrical and prismatic cells may be encased in metal cans, cases, and lids, while pouch cells may be enclosed in multilayer laminate foils. Battery terminals **1** connect the electrodes inside the battery cell to the electrical circuit outside the battery cell, with one being a positive terminal and the other being a negative terminal. As illustrated in FIG. 4, battery cells **10** may be connected by interconnector wires **5** with other battery cells **10** in series or in parallel to enable an electric current to flow between cells **10.**

As illustrated in FIGS. 3, 4, 5, 6B, 6C, and 7, battery cells **10** may be arranged in modules **100** comprising multiple cells **10** connected in series or in parallel. The modules **100** may include a partial enclosure of the arranged cells **10.** Ancillary components, such as those aforementioned, may be included. Spaces of any dimensions may be located between the plurality of cells, ancillary components, base, and/or any interior surface of the module wall or other enclosure **120.**

FIG.1 illustrates a top-down view of cylindrical battery cells **10** having terminals **1.** As shown, the cells are arranged in rows with either cooling tubes **3** or dielectric and thermal insulation paper (insulation paper) **4** between them. As shown, materials, such as powder coatings and adhesive **6** formed from the compositions disclosed herein, respectively, may be positioned between the cells **10,** cooling tubes **3** and/or insulation paper **4.**

FIG.2 illustrates an exploded isometric view of an array of prismatic battery cells **10.** As shown, each prismatic cell **10** may comprise a top **11,** a bottom, and walls **13** positioned between the top and bottom and each having a surface. As shown, coatings (i.e., powder coatings and adhesives) **8** formed from the compositions disclosed herein, may be positioned between surfaces of cell walls **13** of adjacent cells **10.**

FIG.3 illustrates a cut-out front view of an array of pouch battery cells **10** in a module **100.** The module walls **120** may partially encase the cells **10.** As shown, materials such as coatings (i.e., powder coatings and adhesives) **8** formed from the compositions disclosed herein, may be positioned between surfaces of cells **10.**

FIG.4 illustrates an isometric view of cylindrical cells **10** in a battery module **100.** Each cell may comprise a top **11,** a bottom **12,** and walls **13** positioned between the top and bottom and each having a surface. The top **11** and the bottom **12** may be oppositely charged terminals with one being a positive terminal **1** and the other being a negative terminal (not shown). The battery cells may be connected at their terminals by interconnectors such as wires **5** and the like to enable an electric current to flow between the electric cells. The module **100** or module walls **120** may form a space having a volume. The cells **10** may be positioned within the space to consume a portion of the volume. The material, such as powder coatings and adhesives **7** formed from the compositions disclosed herein, may be positioned within the space to consume a portion of the volume such that the material is adjacent to a surface of a cell wall **13** and/or an interior surface of one of the walls **120** of the module **100.**

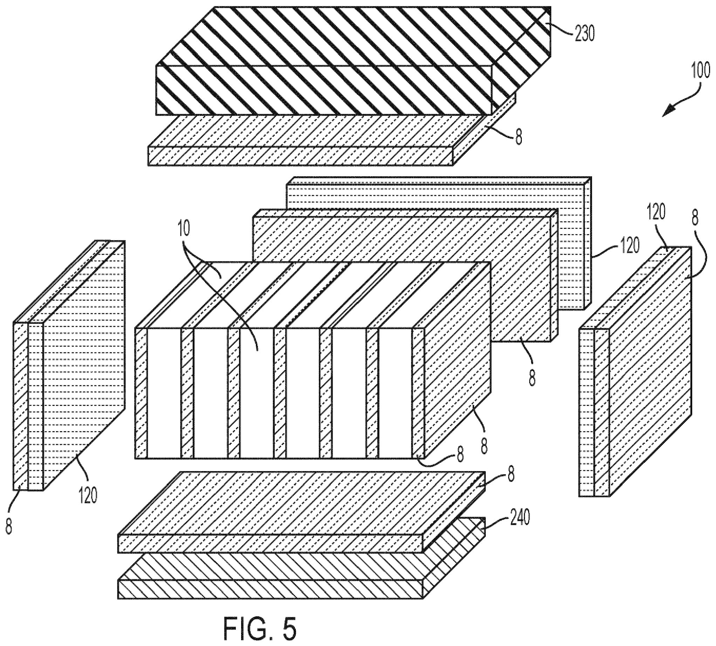

FIG.5 illustrates an exploded perspective view of a battery module **100** comprised of one or more arrays of battery cells **10,** a cooling fin **230,** and/or a cooling plate **240.** Materials, such as coatings (i.e., powder coatings and adhesives) **8** formed from the compositions disclosed herein, may be positioned between cells **10.** Additional coatings **8** may be positioned between the cells **10,** the cooling fin **230** and/or the cooling plate **240.** Additional coatings may be positioned between the battery cell array and an interior surface of walls **120.** Other coatings **8** may be positioned adjacent to an exterior surface of the walls **120.**

FIG.6 illustrates an isometric view of a battery cell **10** (FIG. 6A) to battery module **100** (FIG. 6B) to battery pack **200** (FIG. 6C) battery assembly. The battery module **100** comprises a plurality of battery cells **10** and the battery pack **200** comprises a plurality of battery modules **100.**

FIG.7 illustrates a perspective view of a battery pack **200** cutout. The battery pack includes a plurality of battery modules **100** and cells **10** within each module **100.** The base of the battery pack **200** comprises a cooling plate **240.** Materials, such as powder coatings and adhesives, **9** formed from the compositions disclosed herein, may be positioned between the cooling plate **240** and interior surface of a wall of the battery pack **200.** Materials, such as powder coatings and adhesives **8** formed from the compositions disclosed herein, may be positioned between cells **10** within modules **100.**

FIG.8 illustrates an isometric view of a cell **10** to pack battery **200** assembly. Cells **10** are arranged within the pack **200** (without being in separate modules).

In other cases, the battery cells may be arranged on or within an article such as, but not limited to, a cell to chassis battery assembly, as illustrated in FIG. 9, wherein one or more cells is used to construct the battery assembly without prior assembly of the cells into modules and/or packs. FIG. 9 illustrates an isometric cut-out view of a cell to chassis battery assembly **300.** Cells **10** are arranged on a base comprising the undercarriage **55** and supported by the vehicle frame **45** and under the vehicle interior floor **35.**

Any battery assembly may further comprise a thermal management system (not shown) comprising air or fluid circuits which may be liquid based (for example glycol solutions) or direct refrigerant based. The fire-retardant material may be adjacent to any of these components of the battery assembly.

It has been surprisingly discovered that the coated substrate may have a thermal resistance of no more than 2.0 °C/W as measured using a TIM Thermal Resistance and Conductivity Measurement Apparatus (model LW-9389) in accordance with ASTM D5470 (steady-state method), such as 0.5 °C/W to 2.0 °C/W.

The following numbered clauses summarize some aspects of the invention.
1. A coated substrate comprising a coating layer and an adhesive formed on at least a portion of the coating layer, wherein the coating layer is deposited from a powder coating composition and comprises a dielectric strength of at least 50 kV/mm measured according to ASTM D149-09 (voltage limit 12.0 kV DC, Imax Limit 0.1 mA, 19 sec ramp, 20 sec dwell, 2 sec fall), such as at least 60 kV/mm, such as no more than 120 kV/mm, such as no more than 100 kV/mm, such as 50 kV/mm to 120 kV/mm, such as 60 kV/mm to 100 kV/mm, and a thermal conductivity of at least 0.3 W/K·m measured according to ASTM D5470 (steady-state methods), such as at least 0.35 W/K·m, such as no more than 0.5 W/K·m, such as no more than 0.45 W/K·m, such as 0.3 W/K·m to 0.5 W/K·m, such as 0.35 W/K·m to 0.45 W/K·m, and wherein the adhesive is formed from an adhesive composition and comprises a thermal conductivity of at least 0.7 W/K·m measured according to ASTM D5470, such as at least 0.8 W/K·m, such as at least 0.9 W/K·m, such as at least 1.0 W/K·m, such as at least 1.5 W/K·m, such as no more than 2.5 W/K·m, such as no more than 2.0 W/K·m, such as 0.7 W/K·m to 2.5 W/K·m, such as 0.8 W/K·m to 2.5 W/K·m, such as 0.9 W/K·m to 2.5 W/K·m, such as 1.0 W/K·m to 2.5 W/K·m, such as 1.5 W/K·m to 2.5 W/K·m, such as 0.7 W/K·m to 2.0 W/K·m, such as 0.8 W/K·m to 2.0 W/K·m, such as 0.9 W/K·m to 2.0 W/K·m, such as 1.0 W/K·m to 2.0 W/K·m, such as 1.5 W/K·m to 2.0 W/K·m.
2. The coated substrate of clause 1, wherein the coating comprises a dielectric breakdown of at least 12 kV/mm measured according to ASTM D149-09 (voltage limit 12.0 kV DC, Imax Limit 0.1 mA, 19 sec ramp, 20 sec dwell, 2 sec fall), such as at least 15 kV/mm, such as at least 20 kV/mm, such as at least 25 kV/mm, such as at least 30 kV/mm, and wherein the adhesive comprises a dielectric breakdown of at least 6 kV/mm measured according to ASTM D149-09 (voltage limit 12.0 kV DC, Imax Limit 0.1 mA, 19 sec ramp, 20 sec dwell, 2 sec fall), such as at least 10 kV/mm, such as no more than 20 kV/mm, such as no more than 17 kV/mm, such as 6 kV/mm to 20 kV/mm, such as 10 kV/mm to 17 kV/mm, and/or the adhesive comprises a lap shear strength of at least 3 MPa measured according to ASTM D1002-10 using an Instron 5567 machine in tensile mode with a pull rate of 1 mm per minute, such as at least 8 MPa, such as no more than 30 MPa, such as no more than 12 MPa, such as 3 MPa to 30 MPa, such as 8 MPa to 12 MPa.
3. The coated substrate of any of the preceding clauses, wherein the coating layer comprises a dry film thickness of 50 microns, such as at least 75 microns, such as at least 100 microns, such as no more than 300 microns, such as no more than 250 microns, such as no more than 220 microns, such as no more than 200 microns, such as 50 microns to 300 microns, such as 75 microns to 250 microns, such as 100 microns to 220 microns, such as 100 microns to 200 microns.
4. The coated substrate of any of the preceding clauses, wherein the adhesive layer comprises a dry film thickness of at least 0.2 mm, such as at least 0.3 mm, such as at least 0.4 mm, such as no more than 3.0 mm, such as no more than 1.5 mm, such as no more than 1.0 mm, such as 0.2 mm to 3.0 mm, such as 0.3 mm to 1.5 mm, such as 0.4 mm to 1.0 mm.
5. The coated substrate of any preceding clause wherein the adhesive composition comprises a thermally conductive filler in an amount of at least 60 percent by weight based on total weight of the adhesive composition, such as at least 75 percent by weight, such as no more than 90 percent by weight, such as no more than 86 percent by weight, such as 60 percent by weight to 90 percent by weight, such as 75 percent by weight to 86 percent by weight.
6. The coated substrate of any of the preceding clauses, wherein the powder composition comprises an electrically insulative filler in an amount of at least 30 percent by weight based on total weight of the powder composition, such as at least 45 percent by weight, such as at least 50 percent by weight, such as no more than 60 percent by weight, such as no more than 55 percent by weight, such as no more than 50 percent by weight, such as 30 percent by weight to 60 percent by weight, such as 45 percent by weight to 55 percent by weight, such as 45 percent by weight to 55 percent by weight, such as 45 percent by weight to 50 percent by weight, such as 50 percent by weight to 55 percent by weight.
7. The coated substrate of clause 5 or clause 6, wherein the adhesive composition further comprises a non-thermally conductive filler, an electrically insulative filler, a fire retardant filler or any combination thereof.
8. The coated substrate of any of clauses 5 to 7, wherein the powder composition further comprises a thermally conductive filler, a non-thermally conductive filler, a fire retardant filler or any combination thereof.
9. The coated substrate of any of clauses 5 to 8, wherein the adhesive composition further comprises a compound comprising an electrophilic functional group, a thiol-terminated compound, a thermoplastic polymer or any combination thereof.
10. The coated substrate of any of clauses 5 to 9, wherein the powder composition further comprises a film-forming resin comprising a (meth)acrylate resin, a polyurethane, a polyester, a polyamide, a polyether, a polysiloxane, an epoxy resin, a vinyl resin, copolymers thereof, or any combination thereof.
11. The coated substrate of any of the preceding clauses, wherein the substrate is part of an electrical storage device.
12. The coated substrate of clause 11, wherein the electrical storage device comprises a battery or battery component.
13. The coated substrate of clause 12, wherein the battery or battery component comprises a battery cell, a battery shell, a battery module, a battery pack, a battery box, a battery cell casing, a pack shell, a battery lid and tray, a thermal management system, a battery housing, a module housing, a module racking, a battery side plate, a battery cell enclosure, a cooling module, a cooling tube, a cooling fin, a cooling plate, a bus bar, a battery frame, an electrical connection, metal wires, copper or aluminum conductors or cables, or any combination thereof.
14. The coated substrate of any preceding clauses, further comprising a second substrate in contact with the adhesive.
15. The coated substrate of Clause 14, wherein the first substrate is a cooling plate and the second substrate is a battery cell.
16. The coated substrate of any of the preceding clauses, wherein the coated substrate has a thermal resistance of no more than 2.0 °C/W as measured using a TIM Thermal Resistance and Conductivity Measurement Apparatus (model LW-9389) in accordance with ASTM D5470 (steady-state method), such as 0.5 °C/W to 2.0 °C/W.
17. A system for coating a substrate comprising a powder coating composition comprising an electrically insulative filler and an adhesive coating composition comprising a thermally conductive filler, wherein the two layers, when deposited on a substrate and cured, have a thermal resistance of no more than 2.0 °C/W as measured using a TIM Thermal Resistance and Conductivity Measurement Apparatus (model LW-9389) in accordance with ASTM D5470 (steady-state method), such as 0.5 °C/W to 2.0 °C/W.
18. The system of clause 17, wherein the adhesive layers, when deposited and cured, has a lap shear strength of at least 3 MPa measured according to ASTM D1002-10 using an Instron 5567 machine in tensile mode with a pull rate of 1 mm per minute, such as 3 MPa to 30 MPa, such as 8 MPa to 12 MPa.
19. The system of clause 17 or clause 18, wherein the adhesive composition comprises 60 percent by weight to 90 percent by weight of the thermally conductive filler based on total weight of the adhesive composition, such as 75 percent by weight to 86 percent by weight.
20. The system of any of clauses 17 to 19, wherein the powder composition comprises 30 percent by weight to 90 percent by weight of electrically insulative filler based on total weight of the powder composition, such as 45 percent by weight to 55 percent by weight.
21. The system of any of clauses 17 to 20, wherein the adhesive composition further comprises a non-thermally conductive filler, an electrically insulative filler and/or a fire retardant filler.
22. The system of any of clauses 17 to 21, wherein the powder composition further comprises a thermally conductive filler, a non-thermally conductive filler and/or a fire retardant filler.
23. The system of any of clauses 17 to 22, wherein the adhesive composition further comprises a compound comprising an electrophilic functional group, a thiol-terminated compound, a thermoplastic polymer or any combination thereof.
24. The system of any of clauses 17 to 23, wherein the powder composition further comprises a film-forming resin comprising a (meth)acrylate resin, a polyurethane, a polyester, a polyamide, a polyether, a polysiloxane, an epoxy resin, a vinyl resin, copolymers thereof, or any combination thereof.
25. A method of coating a substrate comprising applying a powder composition onto a surface of the substrate to form a coating and applying an adhesive composition to at least a portion of the coating to form an adhesive.
26. The method of clause 25, wherein the coating layer is formed via a multi-application process.
27. The method of clause 25 or clause 26, wherein the powder composition is at least partially cured prior to application of the adhesive composition.
28. The method of any of clauses 25 to 27, wherein the resulting coated substrate comprises any coated substrate of any of clauses 1 to 16.
29. A battery comprising a battery cell and the coated substrate of any of clauses 1 to 16.
30. The battery of clause 29, wherein the battery cell and the coating are housed in a module.
31. The battery of clause 30, wherein the battery and the coating are housed in a pack.
32. The battery of clause 30, wherein the module is housed in a pack.
33. The battery of clause 30, positioned adjacent to a vehicle chassis.
34. The battery of any of clauses 29 to 33, further comprising a battery component.
35. A vehicle comprising the battery of any of clauses 29 to 34.
36. The vehicle of clause 35, wherein the vehicle comprises a land vehicle, an aircraft or a bicycle, such as an electric bicycle.

The following examples are for illustration purposes only, which, however, are not to be considered as limiting.

### EXAMPLES

### Powder Coating Compositions

For Example 1, 0.6 grams of carbon black, 25.44 grams of barium sulfate, and 0.15 grams of aluminum oxide were added to an epoxy-containing powder coating composition crosslinked with a phenolic curative. For Example 2, 0.6 grams of carbon black, 50 grams of aluminum trihydroxide, and 0.15 grams of aluminum oxide were added to an epoxy-containing powder coating composition crosslinked with a phenolic curative.

The electrically insulative fillers were incorporated into the chips of the powder coating compositions. The chips were then milled in a Dongyuan ACM^{®}-05 Air Classifying Mill to obtain a fine powder, followed by tap-sieving with a 160 mesh to achieve final particle size ranging between 5 to 100 microns with a majority of the particles being from 30 to 52 microns by volume. The resulting coating composition for each of Examples 1 and 2 was solid particulate powder coating composition that was free flowing.

### Evaluation of Dielectric Performance.

The powder coating compositions of each of Examples 1 and 2 was electrostatically applied with an Encore Nordson powder coating cup gun with a 3mm flat spray nozzle onto aluminum substrates (AQT-412 panels of alloy 3003, bare mill finish from Q-LAB) at the following parameters: voltage at of 60kV, amperage restriction at 20µA, 10 psi atomizing and 10 psi conveying flow air.

For testing Dielectric Breakdown Voltage, a coating with a dry film thickness of 150~200 µm was formed on the aluminum panel from the powder coating composition of Example 1 or Example 2. The panels were baked at 190°C for 20 minutes, and then cooled down at room temperature to get the final sample. The Dielectric Breakdown Voltage of each sample was measured using a Sefelec Dielectric Strength Tester RMG12AC-DC in accordance with ASTM D149-09 Dielectric Breakdown Voltage and Dielectric Strength test. The measurement adopted the following parameters: Voltage limit 12.0 kV DC, Imax Limit: 0.1 mA, 10 second ramp, 20 second dwell, and 2 second fall.

Specifically, the measurement included the following steps: (1) the sample (the coated aluminum panel) was placed in the electrically insulated box of the Dielectric Strength Tester and on the brass flat top cylinder electrical contact, with the coating side of the sample facing the contact; (2) the brass convex tip was lowered and rested on the sample's backside (the opposite side of the coating side), and then the box was sealed; (3) the Dielectric Strength Tester was run three times and the values were averaged (reported in Table 2).

### Evaluation of Thermal Conductivity.

The powder coating compositions of each of Examples 1 and 2 was electrostatically applied with an Encore Nordson powder coating cup gun with a 3mm flat spray nozzle onto aluminum substrates (AQT-412 panels of alloy 3003, bare mill finish from Q-LAB) at the following parameters: voltage at of 60kV, amperage restriction at 20µA, 10 psi atomizing and 10 psi conveying flow air.

For testing Thermal Conductivity, a powder coating with a dry film thickness of 100 µm, 160 µm or 220 µm was formed on the aluminum panels from the powder coating compositions of Examples 1 or 2. Powder coatings having a thickness of either 160 µm or 220 µm were formed using a two-step application process to arrive at the final desired coating thickness. All panels were baked at 190°C for 20 minutes, and then cooled down at room temperature. Formed coatings were removed from the panels to obtain "free" films, which were cut into square samples of 26mm*26mm for measurement.

The Thermal Conductivity of each sample was measured by TIM Thermal Resistance and Conductivity Measurement Apparatus (model is LW-9389) and in accordance with ASTM D5470 (steady-state methods). The test results of Dielectric Breakdown Voltage and Thermal Conductivity of the Examples 1 and 2 are summarized in Table 2.

**TABLE 2: Dielectric Breakdown Voltage and Thermal Conductivity of Coatings Formed From Powder Compositions**

| | Example 1 | Example 2 |
|---|---|---|
| | | |
| Thermal Conductivity W/K-m | 0.292 | 0.719 |
| Dielectric Breakdown (kV) | 12 | 12 |

### Thermal Conductive Adhesives (TCA)

For Example 3, 194.65 grams of aluminum oxide were added to part A (isocyanate-containing component) of a two-component polyurethane-based adhesive composition. Part B comprised a polyol and an accelerator. For Example 4, 40 grams of aluminum oxide and 40 grams of aluminum hydroxide were added to part A (isocyanate-containing component) of a two-component polyurethane-based adhesive composition. Part B comprised a polyol and an accelerator.

The method for preparing the TCA compositions comprised:
(i) Dehydration of thermally conductive fillers: The thermally conductive fillers S403Z and APYRAL 20X were dehydrated before use: weighed and deposed S403Z and APYRAL 20X in an oven at 105°C,until the moisture content in each filler < 1000ppm.
(ii) Mixing process of Part A: The adhesive components and the thermally conductive fillers were weighed in a planetary stirring kettle and mixed in the kettle for 25 minutes with the speed of the stirring paddle of 35 RPM and the speed of the dispersing plate of 359RPM. From 5 minutes of stirring, the kettle was vacuumized to a vacuum degree of -0.99~1 through a vacuum pump. After stirring, the vacuum pump was turned off and nitrogen gas was introduced into the kettle to make up the air pressure balance. Then, the mixture A was removed from the kettle and packed into cartridges by a press machine.
(iii) Mixing process of Part B: The adhesive components were weighed in a planetary stirring kettle and mixed in the kettle for 25 minutes with the speed of the stirring paddle of 35 RPM and the speed of the dispersing plate of 359RPM. From 5 minutes of stirring, the kettle was vacuumized to a vacuum degree of -0.99~1 through a vacuum pump. After stirring, the vacuum pump was turned off and nitrogen gas was introduced into the kettle to make up the air pressure balance. Then, the mixture B was removed from the kettle and packed into cartridges by a press machine.

### Evaluation of Thermal Conductivity.

The cartridges of Part A and Part B were applied with a SULZER DP2X400 glue gun at 3~6bar air pressure onto PET film, and covered with another PET film. Samples were put into a tablet machine for pressure and control the thickness with 0.2~3.0mm thickness frame as spacer. After the films were fully cured, they were removed and the thermal conductivity was tested with a thermal conductivity tester in accordance with ASTM D5470.

### Two-layer system

The powder coatings of Examples 1 and 2 were applied to substrates (Al3003 Panel) according to the same procedure described above, and the thermal conductive adhesive coatings of Examples 3 and 4 were applied above the powder coatings according to the same procedure as described above. During the application of the thermal conductive adhesive coatings, stainless steel balls of diameter of 0.5 mm were used as spacer to control the thickness of the thermal conductive adhesive coatings. Another Al3003 panel was covered on the thermal conductive adhesive coatings, and clamps were used to combine the two Al3003 panels tightly till the coatings were fully cured.

The lap shear strength of the thermally conductive adhesive was measured according to ASTM D1002-10 using 2024-T3 aluminum substrate of 1.6 mm thickness, as measured by an INSTRON 5567 machine in tensile mode with a pull rate of 1.3 mm per minute. Bond strength was measured according to GB/T5210 using an aluminum column of 100*10*10 mm by a universal tensile testing machine with a pull rate of 5 mm per minute.

The Thermal Resistance of the two layer systems were measured by TIM Thermal Resistance and Conductivity Measurement Apparatus (model is LW-9389) and in accordance with ASTM D5470 (steady-state methods).

**Table 3. Coated Substrates**

| Examples (Powder + Adhesive) | Thermal Conductivity of Powder (W/mK) | Lap Shear Strength of Adhesive (MPa) | Bond Strength of Adhesive (MPa) | Thermal Conductivity of Adhesive (W/mK) | Thermal Resistance of Adhesive + Powder Coating (°C/w) |
|---|---|---|---|---|---|
| 1+3 | 0.292 | 13.75 | 10.1 | 1.4 | 1.520 |
| 1+4 | 0.292 | 9.89 | 9.27 | 2.0 | 1.382 |
| 2+3 | 0.719 | 15.07 | 12.54 | 1.4 | 1.064 |
| 2+4 | 0.719 | 13.01 | 12.54 | 2.0 | 0.928 |

These data demonstrate that the combination of thermally conductive dielectric powder coating with a lower thermally conductive adhesive results in a coating stack having good adhesive performance (lap shear and bond strength) and a low thermal resistance (i.e., Examples 2+3) compared to more highly filled systems (Examples 2+4), which had lower lap shear performance.

Whereas particular examples of this disclosure have been described above for purposes of illustration, it will be evident to those skilled in the art that numerous variations of the details of the present disclosure may be made without departing from what is defined in the appended claims.

## Claims

1. A coated substrate comprising a coating layer and an adhesive formed on at least a portion of the coating layer, wherein the coating layer is deposited from a powder coating composition and comprises a dielectric strength of at least 50 kV/mm measured according to ASTM D149-09 (voltage limit 12.0 kV DC, Imax Limit 0.1 mA, 19 sec ramp, 20 sec dwell, 2 sec fall), such as at least 60 kV/mm, such as no more than 120 kV/mm, such as no more than 100 kV/mm, such as 50 kV/mm to 120 kV/mm, such as 60 kV/mm to 100 kV/mm, and a thermal conductivity of at least 0.3 W/K·m measured according to ASTM D5470 (steady-state methods), such as at least 0.35 W/K·m, such as no more than 0.5 W/K·m, such as no more than 0.45 W/K·m, such as 0.3 W/K·m to 0.5 W/K·m, such as 0.35 W/K·m to 0.45 W/K·m, and wherein the adhesive is formed from an adhesive composition and comprises a thermal conductivity of at least 0.7 W/K·m measured according to ASTM D5470, such as at least 0.8 W/K·m, such as at least 0.9 W/K·m, such as at least 1.0 W/K·m, such as at least 1.5 W/K·m, such as no more than 2.5 W/K·m, such as no more than 2.0 W/K·m, such as 0.7 W/K·m to 2.5 W/K·m, such as 0.8 W/K·m to 2.5 W/K·m, such as 0.9 W/K·m to 2.5 W/K·m, such as 1.0 W/K·m to 2.5 W/K·m, such as 1.5 W/K·m to 2.5 W/K·m, such as 0.7 W/K·m to 2.0 W/K·m, such as 0.8 W/K·m to 2.0 W/K·m, such as 0.9 W/K·m to 2.0 W/K·m, such as 1.0 W/K·m to 2.0 W/K·m, such as 1.5 W/K·m to 2.0 W/K·m.

2. The coated substrate of claim 1, wherein the coating comprises a dielectric breakdown of at least 12 kV/mm measured according to ASTM D149-09 (voltage limit 12.0 kV DC, Imax Limit 0.1 mA, 19 sec ramp, 20 sec dwell, 2 sec fall), such as at least 15 kV/mm, such as at least 20 kV/mm, such as at least 25 kV/mm, such as at least 30 kV/mm, and wherein the adhesive comprises a dielectric breakdown of at least 6 kV/mm measured according to ASTM D149-09 (voltage limit 12.0 kV DC, Imax Limit 0.1 mA, 19 sec ramp, 20 sec dwell, 2 sec fall), such as at least 10 kV/mm, such as no more than 20 kV/mm, such as no more than 17 kV/mm, such as 6 kV/mm to 20 kV/mm, such as 10 kV/mm to 17 kV/mm, and/or the adhesive comprises a lap shear strength of at least 3 MPa measured according to ASTM D1002-10 using an Instron 5567 machine in tensile mode with a pull rate of 1 mm per minute, such as at least 8 MPa, such as no more than 30 MPa, such as no more than 12 MPa, such as 3 MPa to 30 MPa, such as 8 MPa to 12 MPa.

3. The coated substrate of any of the preceding claims, wherein the coating layer comprises a dry film thickness of 50 microns, such as at least 75 microns, such as at least 100 microns, such as no more than 300 microns, such as no more than 250 microns, such as no more than 220 microns, such as no more than 200 microns, such as 50 microns to 300 microns, such as 75 microns to 250 microns, such as 100 microns to 220 microns, such as 100 microns to 200 microns; and/or
wherein the adhesive layer comprises a dry film thickness of at least 0.2 mm, such as at least 0.3 mm, such as at least 0.4 mm, such as no more than 3.0 mm, such as no more than 1.5 mm, such as no more than 1.0 mm, such as 0.2 mm to 3.0 mm, such as 0.3 mm to 1.5 mm, such as 0.4 mm to 1.0 mm.

4. The coated substrate of any preceding claim wherein the adhesive composition comprises a thermally conductive filler in an amount of at least 60 percent by weight based on total weight of the adhesive composition, such as at least 75 percent by weight, such as no more than 90 percent by weight, such as no more than 86 percent by weight, such as 60 percent by weight to 90 percent by weight, such as 75 percent by weight to 86 percent by weight; and/or wherein the powder composition comprises an electrically insulative filler in an amount of at least 30 percent by weight based on total weight of the powder composition, such as at least 45 percent by weight, such as at least 50 percent by weight, such as no more than 60 percent by weight, such as no more than 55 percent by weight, such as no more than 50 percent by weight, such as 30 percent by weight to 60 percent by weight, such as 45 percent by weight to 55 percent by weight, such as 45 percent by weight to 55 percent by weight, such as 45 percent by weight to 50 percent by weight, such as 50 percent by weight to 55 percent by weight.

5. The coated substrate of claim 4, wherein the adhesive composition further comprises a non-thermally conductive filler, an electrically insulative filler, a fire retardant filler or any combination thereof; and/or
wherein the powder composition further comprises a thermally conductive filler, a non-thermally conductive filler, a fire retardant filler or any combination thereof; and/or
wherein the adhesive composition further comprises a compound comprising an electrophilic functional group, a thiol-terminated compound, a thermoplastic polymer or any combination thereof; and/or
wherein the powder composition further comprises a film-forming resin comprising a (meth)acrylate resin, a polyurethane, a polyester, a polyamide, a polyether, a polysiloxane, an epoxy resin, a vinyl resin, copolymers thereof, or any combination thereof.

6. The coated substrate of any of the preceding claims, wherein the substrate is part of an electrical storage device,
wherein the electrical storage device preferably comprises a battery or battery component,
wherein the battery or battery component preferably comprises a battery cell, a battery shell, a battery module, a battery pack, a battery box, a battery cell casing, a pack shell, a battery lid and tray, a thermal management system, a battery housing, a module housing, a module racking, a battery side plate, a battery cell enclosure, a cooling module, a cooling tube, a cooling fin, a cooling plate, a bus bar, a battery frame, an electrical connection, metal wires, copper or aluminum conductors or cables, or any combination thereof.

7. The coated substrate of any preceding claims, further comprising a second substrate in contact with the adhesive, wherein preferably the first substrate is a cooling plate and the second substrate is a battery cell; and/or wherein the coated substrate has a thermal resistance of no more than 2.0 °C/W as measured using a TIM Thermal Resistance and Conductivity Measurement Apparatus (model LW-9389) in accordance with ASTM D5470 (steady-state method), such as 0.5 °C/W to 2.0 °C/W.

8. A system for coating a substrate comprising a powder coating composition comprising an electrically insulative filler and an adhesive coating composition comprising a thermally conductive filler, wherein the two layers, when deposited on a substrate and cured, have a thermal resistance of no more than 2.0 °C/W as measured using a TIM Thermal Resistance and Conductivity Measurement Apparatus (model LW-9389) in accordance with ASTM D5470 (steady-state method), such as 0.5 °C/W to 2.0 °C/W.

9. The system of claim 8, wherein the adhesive layers, when deposited and cured, has a lap shear strength of at least 3 MPa measured according to ASTM D1002-10 using an Instron 5567 machine in tensile mode with a pull rate of 1 mm per minute, such as 3 MPa to 30 MPa, such as 8 MPa to 12 MPa; and/or wherein the adhesive composition comprises 60 percent by weight to 90 percent by weight of the thermally conductive filler based on total weight of the adhesive composition, such as 75 percent by weight to 86 percent by weight; and/or wherein the powder composition comprises 30 percent by weight to 90 percent by weight of electrically insulative filler based on total weight of the powder composition, such as 45 percent by weight to 55 percent by weight; and/or wherein the adhesive composition further comprises a non-thermally conductive filler, an electrically insulative filler and/or a fire retardant filler; and/or wherein the powder composition further comprises a thermally conductive filler, a non-thermally conductive filler and/or a fire retardant filler; and/or wherein the adhesive composition further comprises a compound comprising an electrophilic functional group, a thiol-terminated compound, a thermoplastic polymer or any combination thereof; and/or
wherein the powder composition further comprises a film-forming resin comprising a (meth)acrylate resin, a polyurethane, a polyester, a polyamide, a polyether, a polysiloxane, an epoxy resin, a vinyl resin, copolymers thereof, or any combination thereof.

10. A method of coating a substrate comprising applying a powder composition onto a surface of the substrate to form a coating and applying an adhesive composition to at least a portion of the coating to form an adhesive.

11. The method of claim 10, wherein the coating layer is formed via a multi-application process; and/or
wherein the powder composition is at least partially cured prior to application of the adhesive composition; and/or
wherein the resulting coated substrate comprises any coated substrate of any of claims 1 to 7.

12. A battery comprising a battery cell and the coated substrate of any of claims 1 to 7.

13. The battery of claim 12, wherein the battery cell and the coating are housed in a module,
wherein preferably the battery and the coating are housed in a pack or the module is housed in a pack; and/or
positioned adjacent to a vehicle chassis.

14. The battery of claim 12 or claim 13, further comprising a battery component.

15. A vehicle comprising the battery of any of claims 12 to 14, wherein the vehicle preferably comprises a land vehicle, an aircraft or a bicycle, such as an electric bicycle.
